# EUROPEAN PATENT APPLICATION

(11) **EP 4 844 666 A1**
(43) Date of publication of application: **25.11.2026**
(21) Application number: 24920562.6
(22) Date of filing: 25.11.2024
(51) Int. Cl.: G06Q 50/26, G06Q 50/04, A23F 5/02, A23N 5/00

(54) **METHOD AND SYSTEM FOR ASSESSING CARBON EMMISIONS ASSOCIATED WITH COFFEE PRODUCTION**

(30) Priority: 25.01.2024 KR 20240011357
(71) Applicant: Kijami Table Ltd., Gongju-si, Chungcheongnam-do 32548 (KR)
(72) Inventor: EOM, Sohee, Seoul 03650 (KR)
(74) Representative: RGTH
(86) International application number: PCT/KR2024/018736
(87) International publication number: WO 2025/159311

(57) **Abstract**

According to an aspect of the present invention, provided is a method for assessing carbon emissions associated with coffee production, the method comprising: a step for defining specific processes and carbon emission factors related to a green bean processing method; a step for specifying at least one specific process included in a first green bean processing method, and specifying at least one carbon emission factor related to the at least one specific process; and a step for calculating carbon emissions for a product produced by the first green bean processing method, the carbon emissions being calculated with reference to information about the at least one specific process and the at least one carbon emission factor.

## Description

### FIELD OF THE INVENTION

The present invention relates to a method and system for assessing carbon emissions associated with coffee production.

### BACKGROUND

Life Cycle Assessment (LCA) refers to analyzing various environmental impact indicators such as global warming, eutrophication, acidification, and fine dust impacts, by comprehensively considering material and energy inputs and emissions at all stages including raw material acquisition, material production, product manufacturing, use, and disposal. In general, the most important indicator of LCA is life-cycle greenhouse gas emissions affecting global warming, which is also expressed as a carbon footprint.

In recent years, as awareness of the climate crisis has been heightened throughout society, discussions on carbon footprints are being actively carried out in all industrial fields. Coffee is one of the foods with the largest carbon emissions in its production process, and in order to acquire carbon-neutral product certification or low-carbon product certification for coffee, it is necessary to accurately identify carbon emissions (or a carbon emission amount) in the production process thereof.

In order to make coffee, a process of processing coffee cherries to produce green beans is first carried out, and since energy and water are used and wastewater is discharged in this process, there exist various factors related to carbon emissions, i.e., various carbon emission factors in the production process. However, there exist a wide variety of methods of producing green beans depending on growing environments of coffee and/or characteristics of coffee farms (e.g., sizes, natural environments, technologies, infrastructures, and the like of the farms), and since carbon emission factors related to the methods differ depending on the methods, it is actually difficult to accurately assess carbon emissions in the process of producing green beans.

In this connection, the inventor(s) present a technique for accurately assessing carbon emissions in a process of producing green beans, by defining sub-processes and carbon emission factors related to green bean processing methods; specifying at least one sub-process included in a first green bean processing method, and specifying at least one carbon emission factor related to the at least one sub-process; and calculating carbon emissions of a product produced by the first green bean processing method, with reference to information on the at least one sub-process and the at least one carbon emission factor.

### <PRIOR ART DOCUMENTS>

### <PATENT DOCUMENTS>

(Patent Document 1) Korean Registered Patent Publication No. 10-1981143 (July 11, 2018)

### SUMMARY OF THE INVENTION

One object of the present invention is to solve all the above-described problems in prior art.

Another object of the invention is to define sub-processes and carbon emission factors related to green bean processing methods, specify at least one sub-process included in a first green bean processing method, specify at least one carbon emission factor related to the at least one sub-process, and calculate carbon emissions of a product produced by the first green bean processing method, with reference to information on the at least one sub-process and the at least one carbon emission factor.

Still another object of the invention is to accurately assess carbon emissions in a process of producing green beans.

Yet another object of the invention is to determine reliability of calculated carbon emissions.

The representative configurations of the invention to achieve the above objects are described below.

According to one aspect of the invention, there is provided a method comprising the steps of: defining sub-processes and carbon emission factors related to green bean processing methods; specifying at least one sub-process included in a first green bean processing method, and specifying at least one carbon emission factor related to the at least one sub-process; and calculating carbon emissions of a product produced by the first green bean processing method, with reference to information on the at least one sub-process and the at least one carbon emission factor.

According to another aspect of the invention, there is provided a system comprising: a processing method management unit configured to define sub-processes and carbon emission factors related to green bean processing methods; and a carbon emissions management unit configured to specify at least one sub-process included in a first green bean processing method, specify at least one carbon emission factor related to the at least one sub-process, and calculate carbon emissions of a product produced by the first green bean processing method, with reference to information on the at least one sub-process and the at least one carbon emission factor.

In addition, there are further provided other methods and systems to implement the invention, as well as non-transitory computer-readable recording media having stored thereon computer programs for executing the methods.

According to the invention, it is possible to define sub-processes and carbon emission factors related to green bean processing methods, specify at least one sub-process included in a first green bean processing method, specify at least one carbon emission factor related to the at least one sub-process, and calculate carbon emissions of a product produced by the first green bean processing method, with reference to information on the at least one sub-process and the at least one carbon emission factor.

According to the invention, it is possible to accurately assess carbon emissions in a process of producing green beans.

According to the invention, it is possible to determine reliability of calculated carbon emissions.

### BRIEF DESCRIPTION OF THE DRAWINGS

FIG. 1 schematically shows the configuration of an entire system for assessing carbon emissions associated with coffee production according to one embodiment of the invention.
FIG. 2 specifically shows the internal configuration of a carbon emissions assessment system according to one embodiment of the invention.
FIG. 3 illustratively shows sub-processes and carbon emission factors for each green bean processing method according to one embodiment of the invention.

### <DESCRIPTION OF THE REFERENCE NUMERALS>

100: communication network
200: carbon emissions assessment system
210: processing method management unit
220: carbon emissions management unit
230: communication unit
240: control unit
300: device

### DETAILED DESCRIPTION

In the following detailed description of the present invention, references are made to the accompanying drawings that show, by way of illustration, specific embodiments in which the invention may be practiced. These embodiments are described in sufficient detail to enable those skilled in the art to practice the invention. It is to be understood that the various embodiments of the invention, although different from each other, are not necessarily mutually exclusive. For example, specific shapes, structures, and characteristics described herein may be implemented as modified from one embodiment to another without departing from the spirit and scope of the invention. Furthermore, it shall be understood that the positions or arrangements of individual elements within each embodiment may also be modified without departing from the spirit and scope of the invention. Therefore, the following detailed description is not to be taken in a limiting sense, and the scope of the invention is to be taken as encompassing the scope of the appended claims and all equivalents thereof. In the drawings, like reference numerals refer to the same or similar elements throughout the several views.

Hereinafter, various preferred embodiments of the present invention will be described in detail with reference to the accompanying drawings to enable those skilled in the art to easily implement the invention.

As used herein, a green bean processing method refers to a method of processing coffee cherries to produce green beans. Each green bean processing method may include at least one sub-process, and for each sub-process, there may exist at least one carbon emission factor related to the sub-process.

### Configuration of the entire system

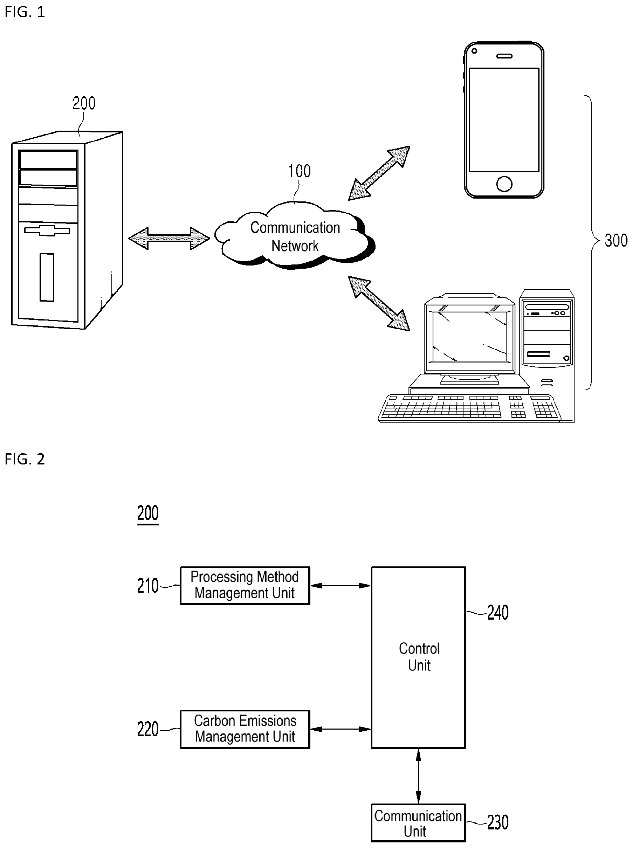

FIG. 1 schematically shows the configuration of the entire system for assessing carbon emissions associated with coffee production according to one embodiment of the invention.

As shown in FIG. 1, the entire system according to one embodiment of the invention may comprise a communication network 100, a carbon emissions assessment system 200, and a device 300.

First, the communication network 100 according to one embodiment of the invention may be implemented regardless of communication modality such as wired and wireless communications, and may be constructed from a variety of communication networks such as local area networks (LANs), metropolitan area networks (MANs), and wide area networks (WANs). Preferably, the communication network 100 described herein may be the Internet or the World Wide Web (WWW). However, the communication network 100 is not necessarily limited thereto, and may at least partially include known wired/wireless data communication networks, known telephone networks, or known wired/wireless television communication networks.

For example, the communication network 100 may be a wireless data communication network, at least a part of which may be implemented with a conventional communication scheme such as WiFi communication, WiFi-Direct communication, Long Term Evolution (LTE) communication, 5G communication, Bluetooth communication (including Bluetooth Low Energy (BLE) communication), infrared communication, and ultrasonic communication. As another example, the communication network 100 may be an optical communication network, at least a part of which may be implemented with a conventional communication scheme such as LiFi (Light Fidelity).

Next, the carbon emissions assessment system 200 according to one embodiment of the invention may function to define sub-processes and carbon emission factors related to green bean processing methods, specify at least one sub-process included in a first green bean processing method, specify at least one carbon emission factor related to the at least one sub-process, and calculate carbon emissions of a product produced by the first green bean processing method, with reference to information on the at least one sub-process and the at least one carbon emission factor.

The configuration and functions of the carbon emissions assessment system 200 according to the invention will be discussed in more detail below.

Next, the device 300 according to one embodiment of the invention is digital equipment capable of connecting to and then communicating with the carbon emissions assessment system 200, and any type of digital equipment having a memory means and a microprocessor for computing capabilities, such as a smart phone, a tablet, a smart watch, a smart band, smart glasses, a desktop computer, a notebook computer, a workstation, a personal digital assistant (PDA), a web pad, and a mobile phone, may be adopted as the device 300 according to the invention.

In particular, the device 300 may include an application (not shown) for assisting a user to receive services such as carbon emissions calculation from the carbon emissions assessment system 200. The application may be downloaded from the carbon emissions assessment system 200 or an external application distribution server (not shown). Meanwhile, the characteristics of the application may be generally similar to those of a processing method management unit 210, a carbon emissions management unit 220, a communication unit 230, and a control unit 240 of the carbon emissions assessment system 200 to be described below. Here, at least a part of the application may be replaced with a hardware device or a firmware device that may perform a substantially equal or equivalent function, as necessary.

### Configuration of the carbon emissions assessment system

Hereinafter, the internal configuration of the carbon emissions assessment system 200 crucial for implementing the invention and the functions of the respective components thereof will be discussed.

FIG. 2 specifically shows the internal configuration of the carbon emissions assessment system 200 according to one embodiment of the invention.

As shown in FIG. 2, the carbon emissions assessment system 200 according to one embodiment of the invention may comprise a processing method management unit 210, a carbon emissions management unit 220, a communication unit 230, and a control unit 240. According to one embodiment of the invention, at least some of the processing method management unit 210, the carbon emissions management unit 220, the communication unit 230, and the control unit 240 may be program modules to communicate with an external system (not shown). The program modules may be included in the carbon emissions assessment system 200 in the form of operating systems, application program modules, or other program modules, while they may be physically stored in a variety of commonly known storage devices. Further, the program modules may also be stored in a remote storage device that may communicate with the carbon emissions assessment system 200. Meanwhile, such program modules may include, but are not limited to, routines, subroutines, programs, objects, components, data structures, and the like for performing specific tasks or executing specific abstract data types as will be described below in accordance with the invention.

Meanwhile, the above description is illustrative although the carbon emissions assessment system 200 has been described as above, and it will be apparent to those skilled in the art that at least a part of the components or functions of the carbon emissions assessment system 200 may be implemented in the device 300 or a server (not shown) or included in an external system (not shown), as necessary.

First, the processing method management unit 210 according to one embodiment of the invention may function to define sub-processes and carbon emission factors related to green bean processing methods.

Specifically, the processing method management unit 210 according to one embodiment of the invention may define, for each green bean processing method, at least one sub-process and at least one carbon emission factor related to the method, and may cause information on the sub-processes and the carbon emission factors to be acquired as defined above.

Here, the at least one sub-process according to one embodiment of the invention may include at least one of pulping (i.e., a process of removing pulp from coffee cherries), drying, washing (i.e., a process of removing mucilage), and hulling (i.e., a process of removing parchment), and the at least one carbon emission factor according to one embodiment of the invention may include at least one of energy usage, energy source, water usage, and wastewater discharge amount. Further, according to one embodiment of the invention, the energy source may encompass all of a type of energy (e.g., thermal energy or electrical energy), a type of fuel used to generate the energy (e.g., fossil energy or solar thermal energy), a method of generating the energy, and the like.

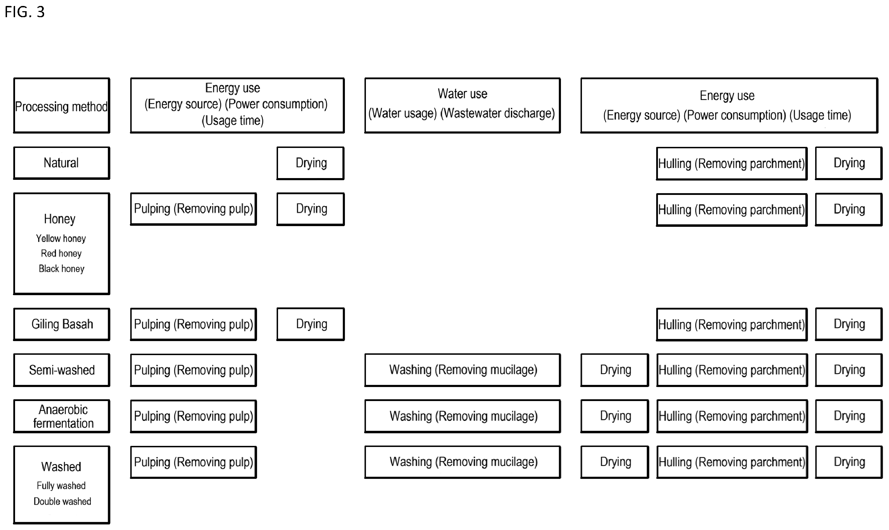

FIG. 3 illustratively shows sub-processes and carbon emission factors for each green bean processing method according to one embodiment of the invention.

Referring to FIG. 3, the green bean processing methods may be classified into natural, honey, Giling Basah, semi-washed, anaerobic fermentation, and washed, and each method may be subdivided in some cases. For example, according to one embodiment of the invention, honey may be subdivided into yellow honey, red honey, black honey, and the like, and washed may be subdivided into fully washed, double washed, and the like.

Referring further to FIG. 3, each green bean processing method may be related to at least one sub-process. For example, according to one embodiment of the invention, natural may be related to the sub-processes of drying (i.e., drying before washing), hulling, and drying (i.e., drying after hulling), and semi-washed may be related to the sub-processes of pulping, washing, drying (i.e., drying after washing and before hulling), and drying (i.e., drying after hulling). Further, each of the sub-processes may be related to at least one carbon emission factor. For example, according to one embodiment of the invention, pulping and drying (i.e., drying before washing) may be related to energy usage, energy source, and the like as carbon emission factors related to energy use; washing may be related to water usage, wastewater discharge amount, and the like as carbon emission factors related to water use; and drying (i.e., drying after washing and before hulling), hulling, and drying (i.e., drying after hulling) may be related to energy usage, energy source, and the like as carbon emission factors related to energy use.

However, the types of the green bean processing methods or the manner of classifying them, the types of the sub-processes related to each green bean processing method, and the types of the carbon emission factors related to each sub-process according to one embodiment of the invention are not limited to those described above, but may be diversely changed as long as the objects of the invention may be achieved. For example, even if a certain green bean processing method is shown in FIG. 3 as not including a washing process, which is a sub-process related to water use, its sub-processes may be defined as including the washing process.

When the sub-processes and the carbon emission factors related to the green bean processing methods are defined as above by the processing method management unit 210 according to one embodiment of the invention, a user becomes able to properly and distinctively input information on the sub-processes and the carbon emission factors as defined above via the device 300 or the like, or the information on the sub-processes and the carbon emission factors becomes able to be properly and distinctively acquired as defined above from a machine used for green bean processing. In this way, it becomes possible to manage information on carbon emissions for each step of the process of producing green beans and for each carbon emission factor, and it ultimately becomes possible to accurately assess carbon emissions in the process of producing green beans, or to accurately determine reliability of calculated carbon emissions, as will be described below.

Next, the carbon emissions management unit 220 according to one embodiment of the invention may function to specify at least one sub-process included in a first green bean processing method, and specify at least one carbon emission factor related to the at least one sub-process.

Specifically, the carbon emissions management unit 220 according to one embodiment of the invention may specify a first green bean processing method used by at least one green bean production unit (e.g., a farm or a cooperative) for which carbon emissions are to be calculated. Further, the carbon emissions management unit 220 according to one embodiment of the invention may specify at least one sub-process included in the first green bean processing method specified as above, and at least one carbon emission factor related to the at least one sub-process.

For example, referring to FIG. 3, when the green bean processing method used by a first farm is anaerobic fermentation, the carbon emissions management unit 220 according to one embodiment of the invention may specify pulping, washing, drying (i.e., drying after washing and before hulling), hulling, and drying (i.e., drying after hulling) as sub-processes in order to calculate carbon emissions of the first farm. Further, the carbon emissions management unit 220 according to one embodiment of the invention may specify energy usage, energy source, and the like as carbon emission factors related to the pulping; specify water usage, wastewater discharge amount, and the like as carbon emission factors related to the washing; and specify energy usage, energy source, and the like as carbon emission factors related to the drying (i.e., drying after washing and before hulling), the hulling, and the drying (i.e., drying after hulling).

Further, the carbon emissions management unit 220 according to one embodiment of the invention may function to calculate carbon emissions of a product produced by the first green bean processing method, with reference to information on the at least one sub-process and the at least one carbon emission factor specified as above.

Specifically, according to one embodiment of the invention, the information on the at least one sub-process and the at least one carbon emission factor specified as above may include information on energy usage, energy source, usage time, and the like of a machine used to perform the sub-process, information on an amount of water used or wastewater discharged to perform the sub-process, and the like. However, the information on the at least one sub-process and the at least one carbon emission factor specified as above according to one embodiment of the invention is not limited to those listed above, but may be diversely changed as long as the objects of the invention may be achieved.

The carbon emissions management unit 220 according to one embodiment of the invention may calculate the carbon emissions of the product produced by the first green bean processing method, with reference to the above information and a predetermined criterion for calculating the carbon emissions (e.g., a criterion for carbon emissions per unit energy consumption). According to one embodiment of the invention, it should be understood that the above product basically refers to green beans, but may also refer to an intermediate product before the green beans are produced.

Meanwhile, the information on the at least one sub-process and the at least one carbon emission factor specified as above by the carbon emissions management unit 220 according to one embodiment of the invention (hereinafter, "basic information") may be collected by at least one device 300 located at a place where the first green bean processing method is performed.

Specifically, according to one embodiment of the invention, the at least one device 300 may be located at a place where the first green bean processing method is performed. When the first green bean processing method includes a plurality of sub-processes and the sub-processes are performed at different places, a plurality of devices 300 may be located at the different places.

For example, the device 300 may be a measurement device related to a carbon emission factor (e.g., a device for measuring energy usage of a machine for performing a pulping process). As another example, the device 300 may be a device (e.g., a computer or a tablet) that allows a producer of a farm or an investigator dispatched from another organization to input a value measured or recorded with respect to a carbon emission factor as key-in data.

Further, the carbon emissions management unit 220 according to one embodiment of the invention may determine reliability of the carbon emissions calculated for the product produced by the first green bean processing method, with reference to data on at least one of a location where the basic information is collected, a time when the basic information is collected, and presence of evidentiary material supporting the basic information.

Specifically, the carbon emissions management unit 220 according to one embodiment of the invention may determine the reliability of the carbon emissions calculated for the product produced by the first green bean processing method, with reference to the data on the location where the basic information is collected.

For example, it may be assumed that the basic information is collected at another place outside a specific spatial range in which the first green bean processing method (or a sub-process included in the processing method) is determined to be performed, and the carbon emissions are calculated with reference to the basic information. The carbon emissions management unit 220 according to one embodiment of the invention may determine the reliability of the carbon emissions such that the reliability of the carbon emissions in this case is lower than reliability of carbon emissions calculated with reference to basic information collected within the specific spatial range.

As another example, it may be assumed that the basic information is collected at a location that has low relevance to a usual location where the basic information has been collected or is distant from the usual location by not less than a predetermined level, and the carbon emissions are calculated with reference to the basic information. The carbon emissions management unit 220 according to one embodiment of the invention may determine the reliability of the carbon emissions such that the reliability of the carbon emissions in this case is lower than reliability of carbon emissions calculated with reference to basic information collected at the usual location.

Further, the carbon emissions management unit 220 according to one embodiment of the invention may determine the reliability of the carbon emissions calculated for the product produced by the first green bean processing method, with reference to the data on the time when the basic information is collected.

For example, it may be assumed that the basic information is collected at another time outside a specific temporal range in which the first green bean processing method (or a sub-process included in the processing method) is determined to be performed, and the carbon emissions are calculated with reference to the basic information. The carbon emissions management unit 220 according to one embodiment of the invention may determine the reliability of the carbon emissions such that the reliability of the carbon emissions in this case is lower than reliability of carbon emissions calculated with reference to basic information collected within the specific temporal range.

As another example, it may be assumed that the basic information is collected at a time that has low relevance to a usual time when the basic information has been collected or deviates from the usual time by not less than a predetermined level, and the carbon emissions are calculated with reference to the basic information. The carbon emissions management unit 220 according to one embodiment of the invention may determine the reliability of the carbon emissions such that the reliability of the carbon emissions in this case is lower than reliability of carbon emissions calculated with reference to basic information collected at the usual time.

Further, the carbon emissions management unit 220 according to one embodiment of the invention may determine the reliability of the carbon emissions calculated for the product produced by the first green bean processing method, with reference to the data on the presence of the evidentiary material supporting the basic information.

For example, the carbon emissions management unit 220 according to one embodiment of the invention may determine the reliability of the carbon emissions such that the reliability of the carbon emissions is higher as there are more types of evidentiary materials related to a carbon emission factor of the first green bean processing method (or a sub-process included in the processing method). Here, according to one embodiment of the invention, the evidentiary materials may be, but are not limited to, a photograph of a measured value of power consumption of a machine used by a farmer (i.e., a user), a photograph of a card on which the farmer's work hours are recorded, and the like.

As another example, when evidentiary material related to a carbon emission factor of the first green bean processing method (or a sub-process included in the processing method) exists but metadata of the evidentiary material (e.g., a location or time at which a photograph as the evidentiary material is taken) has a history of being manipulated (i.e., modified), the carbon emissions management unit 220 according to one embodiment of the invention may determine the reliability of the carbon emissions to be low.

Further, the carbon emissions management unit 220 according to one embodiment of the invention may determine the reliability of the carbon emissions calculated for the product produced by the first green bean processing method, with reference to a value of a carbon emission factor of a specific sub-process collected as the basic information.

For example, it may be assumed that a deviation between the value of the carbon emission factor of the specific sub-process collected as the basic information and a usual value is not less than a predetermined level, and the carbon emissions are calculated with reference to the basic information. The carbon emissions management unit 220 according to one embodiment of the invention may determine the reliability of the carbon emissions such that the reliability of the carbon emissions in this case is lower than reliability of carbon emissions calculated with reference to basic information for which a deviation from the usual value is less than the predetermined level. Here, according to one embodiment of the invention, equipment usage data of some of a plurality of farmers (i.e., users) in a cooperative may be sampled, and the usual value may be, but is not limited to, an average value calculated from the sampled data.

As another example, the carbon emissions management unit 220 according to one embodiment of the invention may determine the reliability of the carbon emissions such that the reliability of the carbon emissions is lower as a deviation among values of a carbon emission factor of a specific sub-process inputted from investigators who verify the collected basic information is greater, as a deviation among values of the carbon emission factor of the specific sub-process inputted from farmers (i.e., users) is greater, and as a deviation between the values of the carbon emission factor of the specific sub-process inputted from the investigator(s) and the values of the carbon emission factor of the specific sub-process inputted from the farmers (i.e., users) is greater.

Meanwhile, the carbon emissions management unit 220 according to one embodiment of the invention may cause information on at least one of the basic information and a manner of calculating the carbon emissions calculated for the product produced by the first green bean processing method to be disclosed to an entity that uses the product. Here, according to one embodiment of the invention, the entity that uses the product may be, but is not limited to, a green bean importer, a coffee shop that sells coffee made from the green beans, a consumer who purchases the coffee made from the green beans, and the like.

The carbon emissions management unit 220 according to one embodiment of the invention may determine an assessment result to be given to the product produced by the first green bean processing method, on the basis of the carbon emissions calculated for the product.

Specifically, the carbon emissions management unit 220 according to one embodiment of the invention may cause an assessment result, such as a score, a grade, or acquisition of certification related to carbon emissions (or a carbon emission amount), to be given to the product produced by the first green bean processing method, on the basis of whether the carbon emissions calculated as above satisfy a predetermined criterion. According to one embodiment of the invention, the predetermined criterion may differ depending on the green bean processing methods. Further, the carbon emissions management unit 220 according to one embodiment of the invention may determine the assessment result to be given to the product, further on the basis of the reliability of the carbon emissions determined as described above.

Next, the communication unit 230 according to one embodiment of the invention may function to enable data transmission/reception from/to the processing method management unit 210 and the carbon emissions management unit 220.

Lastly, the control unit 240 according to one embodiment of the invention may function to control data flow among the processing method management unit 210, the carbon emissions management unit 220, and the communication unit 230. That is, the control unit 240 according to one embodiment of the invention may control data flow into/out of the carbon emissions assessment system 200 or data flow among the respective components of the carbon emissions assessment system 200, such that the processing method management unit 210, the carbon emissions management unit 220, and the communication unit 230 may carry out their particular functions, respectively.

The embodiments according to the invention as described above may be implemented in the form of program instructions that can be executed by various computer components, and may be stored on a computer-readable recording medium. The computer-readable recording medium may include program instructions, data files, and data structures, separately or in combination. The program instructions stored on the computer-readable recording medium may be specially designed and configured for the present invention, or may also be known and available to those skilled in the computer software field. Examples of the computer-readable recording medium include the following: magnetic media such as hard disks, floppy disks and magnetic tapes; optical media such as compact disk-read only memory (CD-ROM) and digital versatile disks (DVDs); magneto-optical media such as floptical disks; and hardware devices such as read-only memory (ROM), random access memory (RAM) and flash memory, which are specially configured to store and execute program instructions. Examples of the program instructions include not only machine language codes created by a compiler, but also high-level language codes that can be executed by a computer using an interpreter. The above hardware devices may be changed to one or more software modules to perform the processes of the present invention, and vice versa.

Although the present invention has been described above in terms of specific items such as detailed elements as well as the limited embodiments and the drawings, they are only provided to help more general understanding of the invention, and the present invention is not limited to the above embodiments. It will be appreciated by those skilled in the art to which the present invention pertains that various modifications and changes may be made from the above description.

Therefore, the spirit of the present invention shall not be limited to the above-described embodiments, and the entire scope of the appended claims and their equivalents will fall within the scope and spirit of the invention.

## Claims

1. A method for assessing carbon emissions associated with coffee production, the method comprising the steps of:
defining sub-processes and carbon emission factors related to green bean processing methods;
specifying at least one sub-process included in a first green bean processing method, and specifying at least one carbon emission factor related to the at least one sub-process; and
calculating carbon emissions of a product produced by the first green bean processing method, with reference to information on the at least one sub-process and the at least one carbon emission factor.

2. The method of Claim 1, wherein the at least one sub-process includes at least one of pulping, drying, washing, and hulling.

3. The method of Claim 1, wherein the at least one carbon emission factor includes at least one of energy usage, energy source, water usage, and wastewater discharge amount.

4. The method of Claim 1, wherein the information on the at least one sub-process and the at least one carbon emission factor is collected by at least one device located at a place where the first green bean processing method is performed.

5. The method of Claim 1, wherein reliability of the carbon emissions is determined with reference to data on at least one of a location where basic information is collected, a time when the basic information is collected, and presence of evidentiary material supporting the basic information, and
wherein the basic information is the information on the at least one sub-process and the at least one carbon emission factor.

6. The method of Claim 1, wherein information on at least one of basic information and a manner of calculating the carbon emissions is caused to be disclosed to an entity that uses the product, and
wherein the basic information is the information on the at least one sub-process and the at least one carbon emission factor.

7. The method of Claim 1, further comprising the step of determining an assessment result to be given to the product produced by the first green bean processing method, on the basis of the carbon emissions.

8. A non-transitory computer-readable recording medium having stored thereon a computer program for executing the method of Claim 1.

9. A system for assessing carbon emissions associated with coffee production, the system comprising:
a processing method management unit configured to define sub-processes and carbon emission factors related to green bean processing methods; and
a carbon emissions management unit configured to specify at least one sub-process included in a first green bean processing method, specify at least one carbon emission factor related to the at least one sub-process, and calculate carbon emissions of a product produced by the first green bean processing method, with reference to information on the at least one sub-process and the at least one carbon emission factor.

10. The system of Claim 9, wherein the at least one sub-process includes at least one of pulping, drying, washing, and hulling.

11. The system of Claim 9, wherein the at least one carbon emission factor includes at least one of energy usage, energy source, water usage, and wastewater discharge amount.

12. The system of Claim 9, wherein the information on the at least one sub-process and the at least one carbon emission factor is collected by at least one device located at a place where the first green bean processing method is performed.

13. The system of Claim 9, wherein the carbon emissions management unit is configured to determine reliability of the carbon emissions with reference to data on at least one of a location where basic information is collected, a time when the basic information is collected, and presence of evidentiary material supporting the basic information, and
wherein the basic information is the information on the at least one sub-process and the at least one carbon emission factor.

14. The system of Claim 9, wherein the carbon emissions management unit is configured to cause information on at least one of basic information and a manner of calculating the carbon emissions to be disclosed to an entity that uses the product, and
wherein the basic information is the information on the at least one sub-process and the at least one carbon emission factor.

15. The system of Claim 9, wherein the carbon emissions management unit is configured to determine an assessment result to be given to the product produced by the first green bean processing method, on the basis of the carbon emissions.
